# EUROPEAN PATENT SPECIFICATION

(11) **EP 3 736 032 B1**
(45) Date of publication and mention of the grant of the patent: **07.07.2021**
(21) Application number: 19173398.9
(22) Date of filing: 08.05.2019
(51) Int. Cl.: B01D 35/02, B01D 35/05, B08B 1/00, E03B 3/00, E03F 1/00, F16K 1/00, E03B 7/07

(54) **PIPE FITTINGS WITH FILTER**
ROHRVERSCHRAUBUNGEN MIT FILTER
RACCORDS DE TUYAU COMPORTANT UN FILTRE

(43) Date of publication of application: 11.11.2020
(73) Proprietor: Yuan Mei Corp., Chang Hua Hsien (TW)
(72) Inventor: Huang, Wei-Kai, LU KANG CHEN, CHANG HUA HSIEN (TW)
(74) Representative: Lang, Christian

(56) References cited:
- EP-A1- 0 207 233
- DE-U1-202013 004 052

## Description

### TECHNICAL FIELD

The present disclosure relates to pipe fittings with a filter.

### BACKGROUND

Conventional pipe fittings are applied to filter fluid between at least one connection pipe so as to avoid a block of impurities of the fluid in an inlet of a washing machine, an outlet of a faucet, and a drawing end of a pump by ways of a filter.

The pipe fittings contain two water connectors, one of which is accommodated in a holding disc configured to flow the fluid, wherein the holding disc has a semispherical filter, and the two water connectors are mounted by screwing at least one nut with threads of the two water connectors, wherein two seal gaskets are fixed on two screwing portions of the two water connectors respectively.

However, a size of the filter is limited by the at least one connection pipe, thus reducing filtration efficiency.

Furthermore, the filter is removed after unscrewing the at least one nut by using a wrench.

Patent application publication EP 0207233 A1 discloses a stop valve comprising a rotatable plug member that has three basic modes. Two of them are the standard modes of a valve, namely a first mode in which a fluid can pass the valve and a second mode in which the through-flow is blocked. A further mode allows for the filter arranged on the plug and filtering the fluid in the first mode to be cleaned by removing particulate matter deposited on the filter surface. The plug is attached on the valve's housing by means of a resilient member extending from the plug along the plug's axis of rotation and being provided with a bulb portion. The resilient member is inserted into an end wall opening, thereby preventing the plug from being easily detached from the housing of the valve. Furthermore, an indexing tab extends axially from the end face of the plug and into an arcuate slot formed in the inner surface of the housing so that the rotation of the plug is limited by the length of said arcuate slot.

### SUMMARY

A primary aspect of the present invention is to provide pipe fittings with a filter which filters fluid flowing between the first connection pipe and the second connection pipe.

Secondary aspect of the present invention is to provide pipe fittings with a filter which removes the filter easily.

Further aspect of the present invention is to provide pipe fittings with a filter which contains the filter of large size.

Another aspect of the present invention is to provide pipe fittings with a filter which replaces the filter easily.

Other objects and features will be in part apparent and in part pointed out hereinafter.

To obtain above-mentioned aspects, pipe fittings with a filter provided by the present invention contains: a body, a filter valve, and two seal gaskets.

The body includes a first connection pipe and a second connection pipe which are connected on two ends of the body respectively, a receiving orifice defined between and communicating with the first connection pipe and the second connection pipe, and at least one guide slot formed on the receiving orifice. The receiving orifice is cylindrical and has at least one opening defined on one of two ends of the receiving orifice.

The filter valve includes a driven section and an operation portion arranged on an end of the driven section.

The two seal gaskets are accommodated in a first peripheral groove and a second peripheral groove respectively.

The driven section has the first peripheral groove, the second peripheral groove which are defined on two sides of the driven section respectively, and a filtration orifice defined between the first peripheral groove and the second peripheral groove and communicating with the driven section, and at least one fixing bolt mounted between the operation portion and the first peripheral groove and extending outward from the driven section. The at least one fixing bolt slides into the at least one guide slot respectively so that the filter valve is accommodated in the receiving orifice. The at least one guide slot is formed on the at least one opening of the receiving orifice.

Preferably, the filter is accommodated in the filtration orifice of the driven section, such that fluid flows between the first connection pipe and the second connection pipe and is filtered by the filter.

Preferably, the receiving orifice has two guide slots formed on two sides of the at least one opening of the receiving orifice, and the two guide slots correspond to two fixing bolts Individually.

Preferably, the at least one guide slot accommodates at least one positioning projection adjacent to at least one bottom of the at least one guide slot respectively so as to stop a removal of the at least one fixing bolt.

Preferably, the filter is removably accommodated in the filtration orifice.

Preferably, the filtration orifice has at least one support rib configured to support the filter.

Preferably, the filtration orifice has multiple horizontal support ribs and multiple vertical support ribs perpendicular to the multiple horizontal support ribs.

Preferably, the receiving orifice has a recess defined on at least one opening of one of two ends of the receiving orifice adjacent to the second connection pipe.

Preferably, the filter is one-piece formed in the filtration orifice.

Preferably, a diameter of the driven section is more than that of a connection portion between the first connection pipe and the second connection pipe.

### BRIEF DESCRIPTION OF THE DRAWINGS

FIG. 1 is a perspective view showing the exploded components of pipe fittings with a filter according to a first embodiment of the present invention.
FIG. 2 is a perspective view showing the assembly of a part of the fittings with the filter according to the first embodiment of the present invention.
FIG. 3 is another perspective view showing the assembly of a part of the fittings with the filter according to the first embodiment of the present invention.
FIG. 4 is a perspective view showing the operation of a part of the fittings with the filter according to the first embodiment of the present invention.
FIG. 5 is also another perspective view showing the assembly of a part of the fittings with the filter according to the first embodiment of the present invention.
FIG. 6 is a side plan view showing the assembly of a part of the fittings with the filter according to the first embodiment of the present invention.
FIG. 7 is a cross sectional view showing the operation of a part of the fittings with the filter according to the first embodiment of the present invention.
FIG. 8 is another cross-sectional view showing the operation of a part of the fittings with the filter according to the first embodiment of the present invention.
FIG. 9 is a perspective view showing the exploded components of pipe fittings with a filter according to a second embodiment of the present invention.
FIG. 10 is a cross sectional view showing the assembly of the pipe fittings with the filter according to the second embodiment of the present invention.

Corresponding reference characters indicate corresponding parts throughout the drawings.

### DETAILED DESCRIPTION

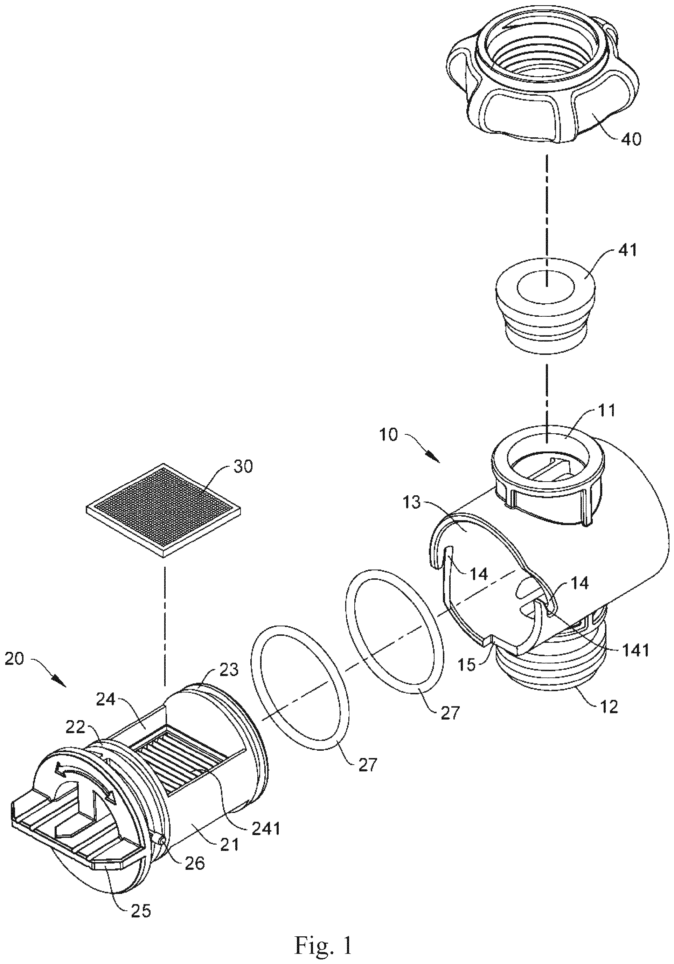

With reference to FIG. 1, pipe fittings with a filter according to a first embodiment of the present invention at least comprises: a body 10, a filter valve 20, two seal gaskets 27, and the filter 30.

The body 10 includes a first connection pipe 11 and a second connection pipe 12 which are connected on two ends of the body 10 respectively, a receiving orifice 13 defined between and communicating with the first connection pipe 11 and the second connection pipe 12, and at least one guide slot 14 formed on the receiving orifice 13.

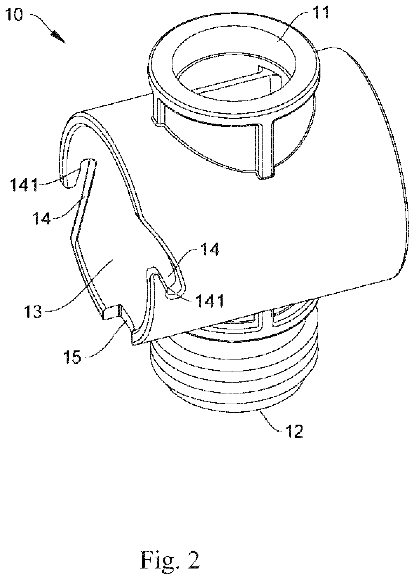

Referring to FIG. 2, the first connection pipe 11 and the second connection pipe 12 are in communication with each other in the body 10 and are connected with other pipes respectively. For example, the first connection pipe 11 is hollow and is connected with a water connector 40 having a screw nut, and the water connector 40 is connected with a first flow pipe having a threaded section, wherein the water connector 40 has a leak-proof rubber 41 accommodated therein. The second connection pipe 12 has outer threads formed on an outer wall thereof so as to screw with a screw nut of a second flow pipe.

The receiving orifice 13 is perpendicular to the first connection pipe 11 and the second connection pipe 12, and the first connection pipe 11, the second connection pipe 12 and the receiving orifice 13 are injection molded or are machined by ways of a mold. The receiving orifice 13 is cylindrical and has at least one opening defined on one of two ends of the receiving orifice 13, and the receiving orifice 13 has the at least one guide slot 14 formed on the at least one opening of the one end of the receiving orifice 13.

In this embodiment, the receiving orifice 13 has two guide slots 14 formed on the at least one opening of the one end of the receiving orifice 13 proximate to the first connection pipe 11, and the receiving orifice 13 has a recess 15 defined the at least one opening of the one end of the receiving orifice 13 adjacent to the second connection pipe 12.

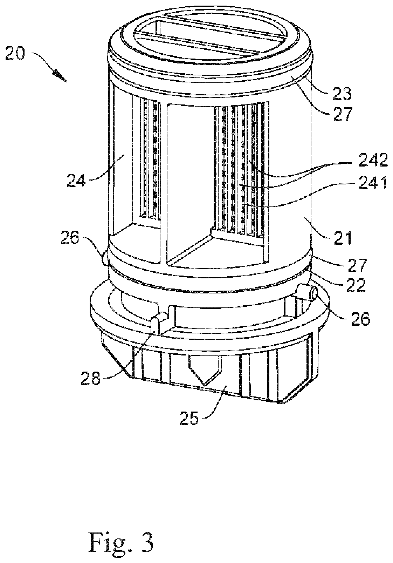

As shown in FIG. 3, the filter valve 20 includes a driven section 21 and an operation portion 25 arranged on an end of the driven section 21, wherein the operation portion 25 is any one of a lever, a rotary button, and a spherical knob so as to be manually operated by a user, such that the driven section 21 is driven by the operation portion 25 to be pushed into or to be pulled out of the receiving orifice 13.

A diameter of the driven section 21 is more than that of a connection portion between the first connection pipe 11 and the second connection pipe 12, such that the filter 30 is accommodated in the driven section 21 so as to enhance filtration efficiency.

The driven section 21 has a first peripheral groove 22, a second peripheral groove 23 which are defined on two sides of the driven section 21 respectively, and a filtration orifice 24 defined between the first peripheral groove 22 and the second peripheral groove 23 and communicating with the driven section 21, wherein the filtration orifice is square or is in other shapes.

At least one fixing bolt 26 is mounted between the operation portion 25 and the first peripheral groove 22 and extends outward from the driven section 21, the at least one guide slot 14 is open, and the at least one guide slot 14 is tilted or is arcuate. In this embodiment, the at least one guide slot 14 is open and is arcuate. The operation portion 25 is operated manually to drive the at least one fixing bolt 26 to slide into a distal end of the at least one guide slot 14 so that the filter valve 20 is fixed in the receiving orifice 13. In this embodiment, the driven section 21 has two bolts 26 corresponding to the two guide slots 14 respectively, and the driven section 21 has a protrusion 28 formed between the two bolts 26 and corresponding to the recess 15.

In this embodiment, the driven section 21 is cylindrical. In another embodiment, the driven section 21 is conical so as to match with the receiving orifice 13 which is conical, and the driven section 21 is moved in receiving orifice 13 matingly.

The two seal gaskets 27 are accommodated in the first peripheral groove 22 and the second peripheral groove 23 respectively, and the filter 30 is removably accommodated in the filtration orifice 24 of the driven section 21, such that fluid flows between the first connection pipe 11 and the second connection pipe 12 and is filtered by the filter 30, and the filter 30 is removed easily by ways of the operation portion 25.

Preferably, the receiving orifice 13 has a guide slot 14 formed on the at least one opening of the one end of the receiving orifice 13 proximate to the first connection pipe 11, and the driven section 21 has a bolt 26 corresponding to the guide slot 14 so as to avoid a removal of the driven section 21 from the receiving orifice 13.

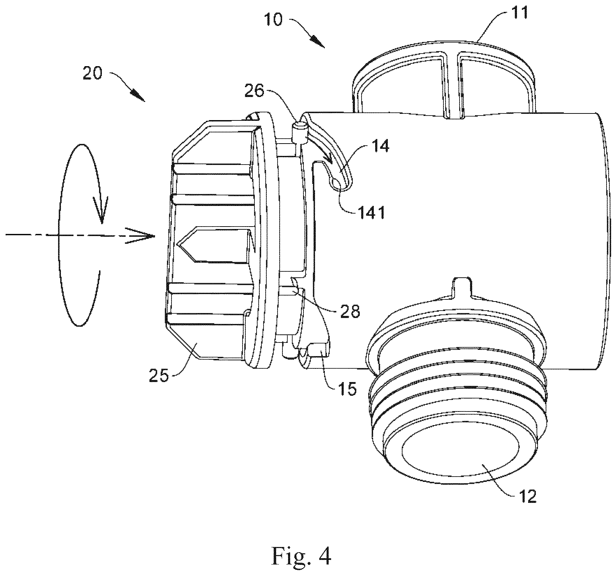

As illustrated in FIG. 4, the driven section 21 is inserted into the receiving orifice 13 of the body 10, the at least one fixing bolt 26 is aligned with the at least one guide slot 14, and the operation portion 25 is manually rotated so that the at least one fixing bolt 26 is guided by the at least one guide slot 14 to move into the driven section 21, hence the filter valve 20 is accommodated in the receiving orifice 13.

The at least one guide slot 14 accommodates at least one positioning projection 141 adjacent to at least one bottom of the at least one guide slot 14 respectively so as to stop a removal of the at least one fixing bolt 26.

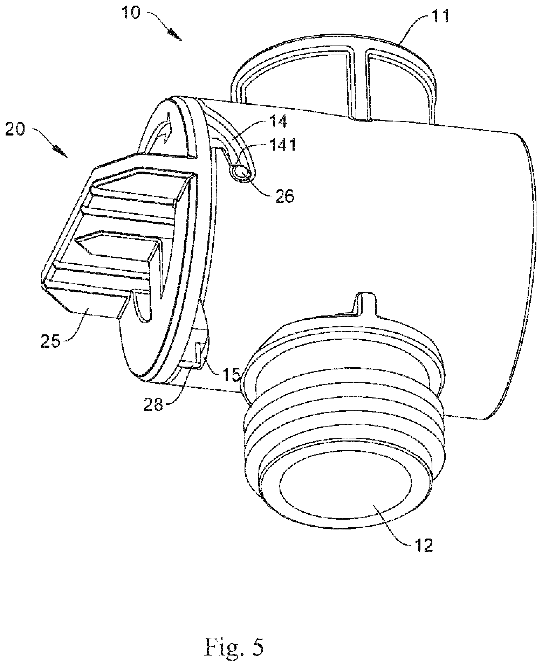

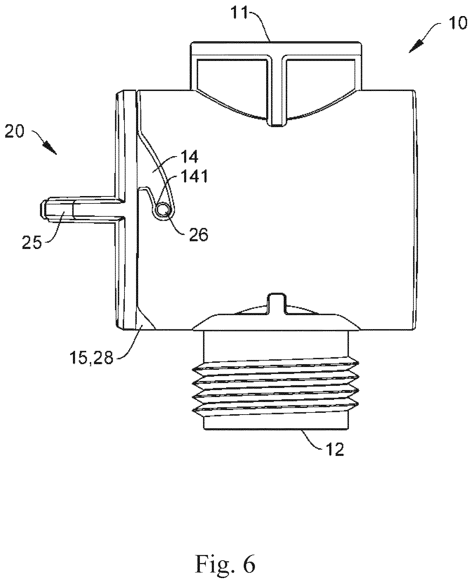

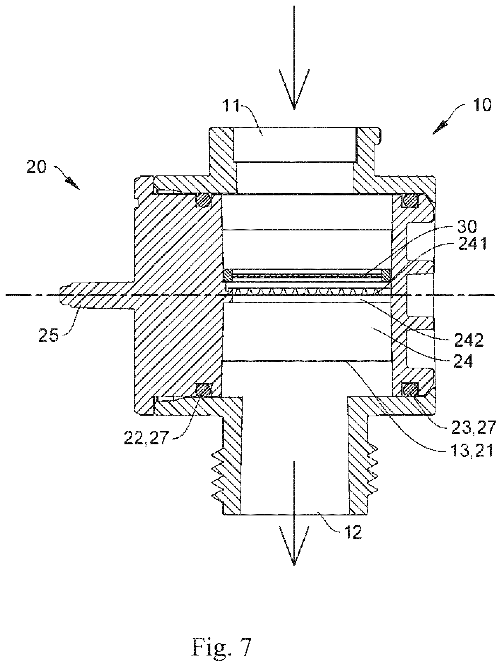

With reference to FIGS. 5-7, when the at least one fixing bolt 26 is guided by the at least one guide slot 14 to slide toward the at least one bottom of the at least one guide slot 14 respectively so as to be stopped by the at least one positioning projection 141, the driven section 21 is moved into the receiving orifice 13 completely.

When the fluid (i.e., water or air) flows into the second connection pipe 12 from the first connection pipe 12 via the filter 30, impurities in the fluid are stopped by the filter 30 and the fluid is stopped by the two seal gaskets 27 so as to avoid a leakage of the fluid between the driven section 21 and the receiving orifice 13.

The filter 30 is accommodated and is adhered in the filtration orifice 24 of the driven section 21 by using adhesive or high frequency equipment.

The filter 30 is removably accommodated in the filtration orifice 24 so as to be replaced. Preferably, the filtration orifice 24 has at least one support rib configured to support the filter 20, thus fixing the filter 30 in the filtration orifice 24 securely.

Referring to FIGS. 1, 3, and 7, the filtration orifice 24 has multiple horizontal support ribs 241 and multiple vertical support ribs 242 perpendicular to the multiple horizontal support ribs 241, wherein multiple slits are defined among the multiple horizontal support ribs 241 and the multiple vertical support ribs 242 individually so that the fluid flows through the multiple slits, and the filter 30 is removably accommodated in the filtration orifice 24.

The receiving orifice 13 has the recess 15, and the driven section 21 has the protrusion 28 extending outward from the driven section 21 and located between the operation portion 25 and the first peripheral groove 22 so that the protrusion 28 corresponds to and engages with the recess 15, thus fixing the filter 30 in the receiving orifice 13 in a correct direction.

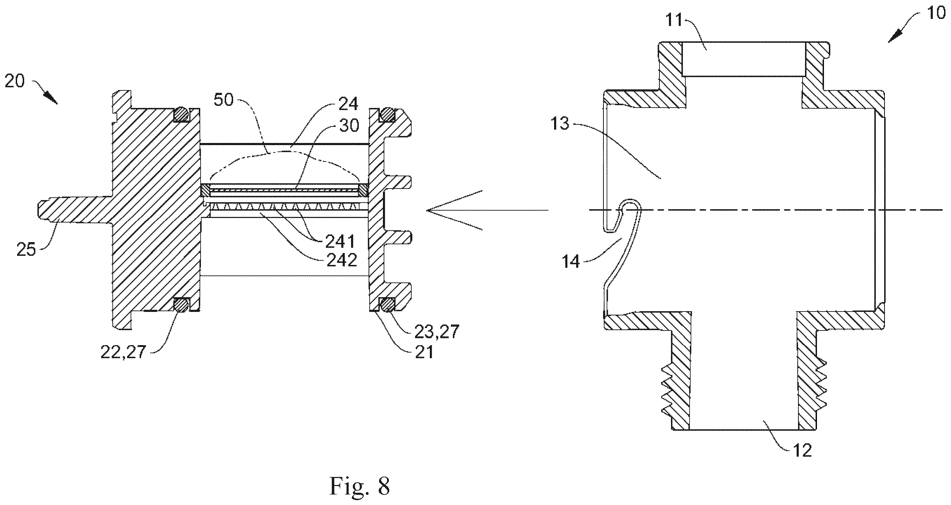

As shown in FIG. 8, the operation portion 25 is rotated so that the at least one fixing bolt 26 moves across the at least one positioning projection 141 and slides out of the at least one guide slot 14, the driven section 21 is removed from the receiving orifice 13, and the filter 30 is detachable so as to eliminate the impurities 50 from the filter 30. Thereafter, the filter 30 is fixed in the receiving orifice 13 by rotating the operation portion 25 after being cleaned.

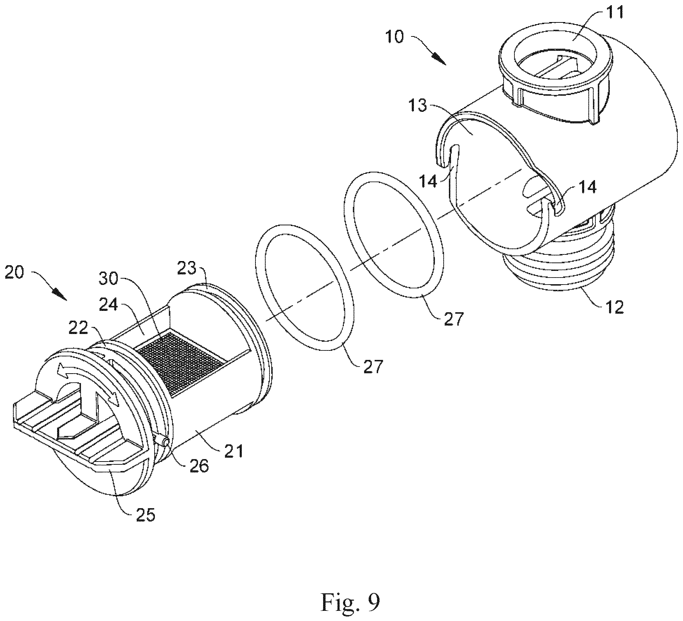

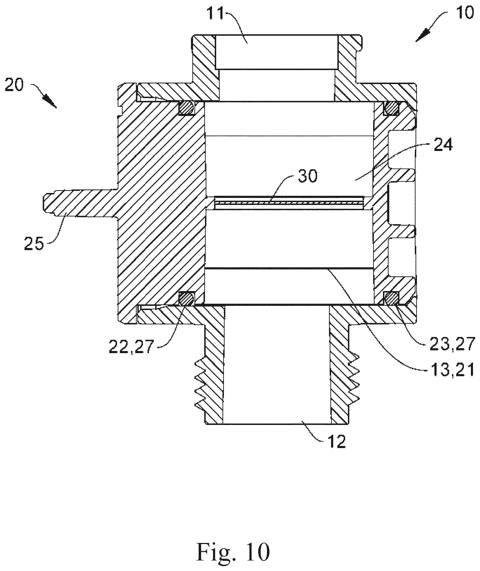

As illustrated in FIGS. 9 and 10, in a second embodiment, the filter 30 is one-piece formed in the filtration orifice 24. For example, the filter 30 is injection molded from plastic material with the filtration orifice 24 so as to eliminate the protrusion 28 and the recess 15, thus reducing fabrication cost.

Having described the invention in detail, it will be apparent that modifications and variations are possible without departing from the scope of the invention defined in the appended claims.

When introducing elements of the present invention or the preferred embodiments thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved, and other advantageous results attained.

As various changes could be made in the above constructions, products, and methods without departing from the scope of the invention, it is intended that all matter contained in the above description and shown in the accompanying drawings shall be interpreted as illustrative and not in a limiting sense.

## Claims

1. Pipe fittings with a filter (30) comprising:
a body (10) including a first connection pipe (11) and a second connection pipe (12) which are connected on two ends of the body (10) respectively, a receiving orifice (13) defined between and communicating with the first connection pipe (11) and the second connection pipe (12), and at least one guide slot (14) formed on the receiving orifice (13), wherein the receiving orifice (13) is cylindrical and has at least one opening defined on one of two ends of the receiving orifice (13);
a filter valve (20) Including a driven section (21) and an operation portion (25) arranged on an end of the driven section (21); and
two seal gaskets (27) accommodated in a first peripheral groove (22) and a second peripheral groove (23) respectively;
wherein the driven section (21) has the first peripheral groove (22), the second peripheral groove (23) which are defined on two sides of the driven section (21) respectively, and a filtration orifice (24) defined between the first peripheral groove (22) and the second peripheral groove (23) and communicating with the driven section (21),
**characterised by**
at least one fixing bolt (26) mounted between the operation portion (25) and the first peripheral groove (22) and extending outward from the driven section (21), wherein the at least one fixing bolt (26) slides into the at least one guide slot (14) respectively so that the filter valve (20) is accommodated in the receiving orifice (13),
wherein the at least one guide slot (14) is formed on the at least one opening of the receiving orifice (13).

2. The pipe fittings as claimed in claim 1, **characterized in that** the filter (30) is accommodated in the filtration orifice (24) of the driven section (21), such that fluid flows between the first connection pipe (11) and the second connection pipe (12) and is filtered by the filter (30).

3. The pipe fittings as claimed in claim 1, **characterized in that** the receiving orifice (13) has two guide slots (14) formed on two sides of the at least one opening of the receiving orifice (13), and the two guide slots (14) correspond to two fixing bolts (26) individually.

4. The pipe fittings as claimed in claim 1, **characterized in that** the at least one guide slot (14) accommodates at least one positioning projection (141) adjacent to at least one bottom of the at least one guide slot (14) respectively so as to stop a removal of the at least one fixing bolt (26).

5. The pipe fittings as claimed in claim 2, **characterized in that** the filter (30) is removably accommodated in the filtration orifice (24).

6. The pipe fittings as claimed in claim 5, **characterized in that** the filtration orifice (24) has at least one support rib configured to support the filter (20).

7. The pipe fittings as claimed in claim 6, **characterized in that** the filtration orifice (24) has multiple horizontal support ribs (241) and multiple vertical support ribs (242) perpendicular to the multiple horizontal support ribs (241).

8. The pipe fittings as claimed in claim 6, **characterized in that** the receiving orifice (13) has a recess (15) defined on at least one opening of one of two ends of the receiving orifice (13) adjacent to the second connection pipe (12).

9. The pipe fittings as claimed in claim 2, **characterized in that** the filter (30) is one-piece formed in the filtration orifice (24).

10. The pipe fittings as claimed in claim 1, **characterized in that** a diameter of the driven section (21) is more than that of a connection portion between the first connection pipe (11) and the second connection pipe (12).

## Patentansprüche

1. Rohrverschraubungen mit einem Filter (30), umfassend:
einen Körper (10), der eine erste Anschlussleitung (11) und eine zweite Anschlussleitung (12), die jeweils an zwei Enden des Körpers (10) verbunden sind, eine Aufnahmeöffnung (13), die zwischen der ersten Anschlussleitung (11) und der zweiten Anschlussleitung (12) definiert ist und mit diesen in Verbindung steht, und mindestens einen Führungsschlitz (14), der an der Aufnahmeöffnung (13) ausgebildet ist, beinhaltet, wobei die Aufnahmeöffnung (13) zylinderförmig ist und mindestens eine Öffnung aufweist, die an einem der zwei Enden der Aufnahmeöffnung (13) definiert ist,
ein Filterventil (20), das eine Antriebssektion (21) und einen Betätigungsabschnitt (25), der an einem Ende der Antriebssektion (21) angeordnet ist, beinhaltet und
zwei Dichtungsscheiben (27), die entsprechend in einer ersten Umfangsnut (22) und einer zweiten Umfangsnut (23) aufgenommen sind,
wobei die Antriebssektion (21) die erste Umfangsnut (22), die zweite Umfangsnut (23), die entsprechend an zwei Seiten der Antriebssektion (21) definiert sind, und eine Filtrationsöffnung (24) aufweist, die zwischen der ersten Umfangsnut (22) und der zweiten Umfangsnut (23) definiert ist und mit der Antriebssektion (21) in Verbindung steht,
**dadurch gekennzeichnet, dass**
mindestens ein Befestigungsbolzen (26) zwischen dem Betätigungsabschnitt (25) und der ersten Umfangsnut (22) montiert ist und sich von der Antriebssektion (21) nach außen erstreckt, wobei der mindestens eine Befestigungsbolzen (26) entsprechend in den mindestens einen Führungsschlitz (14) gleitet, sodass das Filterventil (20) in der Aufnahmeöffnung (13) aufgenommen ist,
wobei der mindestens eine Führungsschlitz (14) an der mindestens einen Öffnung der Aufnahmeöffnung (13) ausgebildet ist.

2. Rohrverschraubung nach Anspruch 1, **dadurch gekennzeichnet, dass** der Filter (30) in der Filtrationsöffnung (24) der Antriebssektion (21) aufgenommen ist, sodass Fluid zwischen der ersten Anschlussleitung (11) und der zweiten Anschlussleitung(12) strömt und durch den Filter (30) filtriert wird.

3. Rohrverschraubung nach Anspruch 1, **dadurch gekennzeichnet, dass** die Aufnahmeöffnung (13) zwei Führungsschlitze (14) aufweist, die an zwei Seiten der mindestens einen Öffnung der Aufnahmeöffnung (13) ausgebildet sind, und die beiden Führungsschlitze (14) individuell mit den zwei Befestigungsbolzen (26) korrespondieren.

4. Rohrverschraubung nach Anspruch 1, **dadurch gekennzeichnet, dass** der mindestens eine Führungsschlitz (14) mindestens einen Positionierungsvorsprung (141) benachbart zu mindestens einem Boden des mindestens einen Führungsschlitzes (14) entsprechend aufnimmt, um ein Entfernen des mindestens einen Befestigungsbolzens (26) zu stoppen.

5. Rohrverschraubung nach Anspruch 2, **dadurch gekennzeichnet, dass** der Filter (30) entfernbar in der Filtrationsöffnung (24) aufgenommen ist.

6. Rohrverschraubung nach Anspruch 5, **dadurch gekennzeichnet, dass** die Filtrationsöffnung (24) mindestens eine Stützrippe aufweist, die zum Stützen des Filters (20) konfiguriert ist.

7. Rohrverschraubung nach Anspruch 6, **dadurch gekennzeichnet, dass** die Filtrationsöffnung (24) mehrere horizontale Stützrippen (241) und mehrere vertikale Stützrippen (242) senkrecht zu den mehreren horizontalen Stützrippen (241) aufweist.

8. Rohrverschraubung nach Anspruch 6, **dadurch gekennzeichnet, dass** die Aufnahmeöffnung (13) eine Aussparung (15) aufweist, die an mindestens einer Öffnung von einem von zwei Enden der Aufnahmeöffnung (13) benachbart zu der zweiten Anschlussleitung (12) definiert ist.

9. Rohrverschraubung nach Anspruch 2, **dadurch gekennzeichnet, dass** der Filter (30) einteilig in der Filtrationsöffnung (24) ausgebildet ist.

10. Rohrverschraubung nach Anspruch 1, **dadurch gekennzeichnet, dass** ein Durchmesser der Antriebssektion (21) größer als derjenige eines Verbindungsabschnitts zwischen der ersten Anschlussleitung (11) und der zweiten Anschlussleitung (12) ist.

## Revendications

1. Raccords de tuyau comportant un filtre (30) comprenant:
un corps (10) incluant un premier tuyau de connexion (11) et un second tuyau de connexion (12) qui sont respectivement reliés sur deux extrémités du corps (10), un orifice de réception (13) défini entre et communiquant avec le premier tuyau de connexion (11) et le second tuyau de connexion (12), et au moins une fente de guidage (14) formée sur l'orifice de réception (13), dans lequel l'orifice de réception (13) est cylindrique et a au moins une ouverture définie sur l'une de deux extrémités de l'orifice de réception (13);
une soupape de filtre (20) incluant une section entraînée (21) et une portion de mise en œuvre (25) agencée sur une extrémité de la section entraînée (21); et
deux garnitures d'étanchéité (27) respectivement logées dans une première rainure périphérique (22) et une seconde rainure périphérique (23);
dans lesquels la section entraînée (21) a la première rainure périphérique (22), la seconde rainure périphérique (23) qui sont respectivement définies sur deux côtés de la section entraînée (21), et un orifice de filtration (24) défini entre la première rainure périphérique (22) et la seconde rainure périphérique (23) et communiquant avec la section entraînée (21),
**caractérisés par**
au moins un boulon de fixation (26) monté entre la portion de mise en œuvre (25) et la première rainure périphérique (22) et s'étendant vers l'extérieur à partir de la section entraînée (21), dans lesquels l'au moins un boulon de fixation (26) coulisse respectivement dans l'au moins une fente de guidage (14) de sorte que la soupape de filtre (20) est logée dans l'orifice de réception (13),
dans lesquels l'au moins une fente de guidage (14) est formée sur l'au moins une ouverture de l'orifice de réception (13).

2. Raccords de tuyau selon la revendication 1, **caractérisés en ce que** le filtre (30) est logé dans l'orifice de filtration (24) de la section entraînée (21), de sorte que du fluide s'écoule entre le premier tuyau de connexion (11) et le second tuyau de connexion (12) et est filtré par le filtre (30).

3. Raccords de tuyau selon la revendication 1, **caractérisés en ce que** l'orifice de réception (13) a deux fentes de guidage (14) formées sur deux côtés de l'au moins une ouverture de l'orifice de réception (13), et les deux fentes de guidage (14) correspondent individuellement à deux boulons de fixation (26).

4. Raccords de tuyau selon la revendication 1, **caractérisés en ce que** l'au moins une fente de guidage (14) loge au moins une partie en saillie de positionnement (141) respectivement adjacente à au moins un fond de l'au moins une fente de guidage (14) afin d'arrêter un enlèvement de l'au moins un boulon de fixation (26).

5. Raccords de tuyau selon la revendication 2, **caractérisés en ce que** le filtre (30) est logé de façon amovible dans l'orifice de filtration (24).

6. Raccords de tuyau selon la revendication 5, **caractérisés en ce que** l'orifice de filtration (24) a au moins une nervure de support configurée pour supporter le filtre (20).

7. Raccords de tuyau selon la revendication 6, **caractérisés en ce que** l'orifice de filtration (24) a de multiples nervures de support horizontales (241) et de multiples nervures de support verticales (242) perpendiculaires aux multiples nervures de support horizontales (241).

8. Raccords de tuyau selon la revendication 6, **caractérisés en ce que** l'orifice de réception (13) a une partie en retrait (15) définie sur au moins une ouverture de l'une de deux extrémités de l'orifice de réception (13) adjacente au second tuyau de connexion (12).

9. Raccords de tuyau selon la revendication 2, **caractérisés en ce que** le filtre (30) est formé d'une seule pièce dans l'orifice de filtration (24).

10. Raccords de tuyau selon la revendication 1, **caractérisés en ce qu'**un diamètre de la section entraînée (21) est plus que celui d'une portion de connexion entre le premier tuyau de connexion (11) et le second tuyau de connexion (12).
